(19) Europäisches Patentamt
European Patent Office
Office européen des brevets

(11) **EP 3 182 364 A1**

(12) **EUROPEAN PATENT APPLICATION**

(43) Date of publication:
**21.06.2017 Bulletin 2017/25**

(51) Int Cl.:
***G06T 5/00*** *(2006.01)*

(21) Application number: **15200343.0**

(22) Date of filing: **16.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Samos Medical Enterprise, SLU**
**45001 Toledo (ES)**

(72) Inventors:
• **Strange, Bryan**
**28046 Madrid (ES)**
• **Oliviero, Antonio**
**45001 Toledo (ES)**

(74) Representative: **Juncosa Miro, Jaime et al**
**Torner, Juncosa i Associates, S.L.**
**Gran Via de les Corts**
**Catalanes, 669 bis, 1o, 2a**
**08013 Barcelona (ES)**

(54) **SYSTEM, METHOD AND COMPUTER PROGRAM PRODUCTS TO DISPLAY AN IMAGE ACCORDING TO THE VISUAL PERCEPTION OF LIVING BEINGS**

(57)    The system comprises a detector (12) to acquire at least one image of an object (11) perceived (13) by a living being (10), said acquired image having a given pixel content; a computer means (14) to perform a processing treatment over said acquired image by applying a dynamic function that extracts a part of the pixel content of the acquired image on dependence of a time of life of the living being, generating a processed image; and displaying means to display said processed image.

```
┌─────────────────────────────────┐
│  Acquire an image of an object   │ ⟍ 201
│    perceived by a living being   │
└─────────────────────────────────┘
                 │
                 ▼
┌─────────────────────────────────┐
│  Process the acquired image by   │ ⟍ 202
│  applying a dynamic function that│
│  extracts a part of the pixel    │
│  content of the acquired image on│
│  dependence of a time of life of │
│  the living being                │
└─────────────────────────────────┘
                 │
                 ▼
┌─────────────────────────────────┐
│         Display the result       │ ⟍ 203
└─────────────────────────────────┘
```

**Fig. 2**

**Description**

Technical Field

The present invention is directed, in general, to the field of computing systems related to the evaluation, or estimation, of visual perception. In particular, the invention relates to a system, to a method, and to computer program products, to display an image according to the visual true perception of living beings such as babies or animals, during a period of time close to the birth and until their visual function is fully developed.

Background of the Invention

From the document EP-B1-1236433 it is known a method for evaluating and stimulating vision or hearing of a subject, allowing performing many tests and exercises. The method provided in this patent, can be scalable in order to be able to produce new tests or exercises based on the needs and suggestions of other users. In addition, the method may also record the reactions of the subject under test and analyze the results obtained. Test cases satisfying specific clinical situations or oriented in function of the subject's answers are also provided.

From the document CN-A-104173021 it is known a method for detecting the vision of an infant. To perform so, this method first sets the system parameters, including an initial detection vision value, the distance between the infant and a display unit, a time interval relative to the change of the position of a pattern for one time and test times of each vision value. Secondly, the attention of the infant is drawn and the infant selective watching chart is displayed, wherein the selective watching chart is formed by vision test bar grating patterns and a grey background, and the width of each bar grate corresponds to one vision value in an international standard vision chart. Finally, the positions of the bar grating patterns are changed in the selective watching chart, each vision value is tested according to the test times, and a next test vision value is adjusted until a highest vision value is detected.

Contrary to this approaches an object of this invention is to provide a new system and method allowing to show an image close, or very similar, to what a living being (e.g. a baby or an animal) really perceives during its development (i.e. from birth until the living being is able to see fully or quite well).

Description of the Invention

To that end, present invention provides a system to display an image according to the true visual perception of living beings, the system comprising as commonly in the field: a detector to acquire one or more images of an object perceived by a living being at a given moment, said acquired image having a given pixel content; a computer means to perform a processing treatment over said acquired image representative of the true vision of the living being at said given moment, generating a processed image; and displaying means to display said processed image, for instance, to be seen by a person.

On contrary of the known proposals, said computer means includes a signal processing filter for application of a dynamic function that extracts a part of the pixel content of the acquired image on dependence of a time of life of the living being.

According to a preferred embodiment, the living being is a baby and the time of life comprises a period of at least 185 days (i.e. from the date of birth of the baby to the date which is known that normal, or accurate, vision of the babies is reached).

According to an embodiment, the signal processing filter is a Butterworth filter.

According to an embodiment, the detector is included in a housing and the system comprises means for attaching the detector to a part of the body of the living being.

According to the proposed system, the displaying means may be included in said computer means or alternatively be included in a computer device, remote to the computer means. In this latter case, the computer device and the computer means will include communication means to communicate with each other through a wired or a wireless technology.

It is also an object of the present invention to provide a method for displaying an image according to the visual perception of living beings, in which one or more images of an object perceived by a living being are acquired by a detector at a given moment, said acquired image having a given pixel content; and a processing treatment is performed, by a computer means, over said acquired image, generating a processed image representative of the true vision perceived by the living being at said given moment, which is further displayed by a displaying means.

In a characteristic manner, in the proposed method, said processing treatment comprises applying a dynamic function that extracts a part of the pixel content of the acquired image on dependence of a time of life of the living being.

According to an embodiment, the method comprises attaching the detector to a part of the body of the living being, preferably its head, said detector comprising at least one camera.

It is also an object of the present invention to provide software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, the proposed invention in view of a baby's age (preferably counted in days) and an image(s) of an object, e.g. captured by a camera, and in view of the application of a dynamic function implemented as a signal processing filter, that takes into account said baby's age (e.g. on the first day the filter is set to have a frequency of 6Hz whereas on day 185, on this day it is assumed that the baby is able to see properly, the frequency filter is set to 0Hz), allows to show the image really perceived by the baby.

Brief Description of the Drawings

The previous and other advantages and features will be more fully understood from the following detailed description of embodiments, with reference to the attached figures, which must be considered in an illustrative and non-limiting manner, in which:

Fig.1 is a schematic illustration of one preferred embodiment of the system according to the present invention

Fig. 2 is a flowchart of a process for displaying an image according to the visual perception of a living being according to the present invention.

Detailed Description of Preferred Embodiments

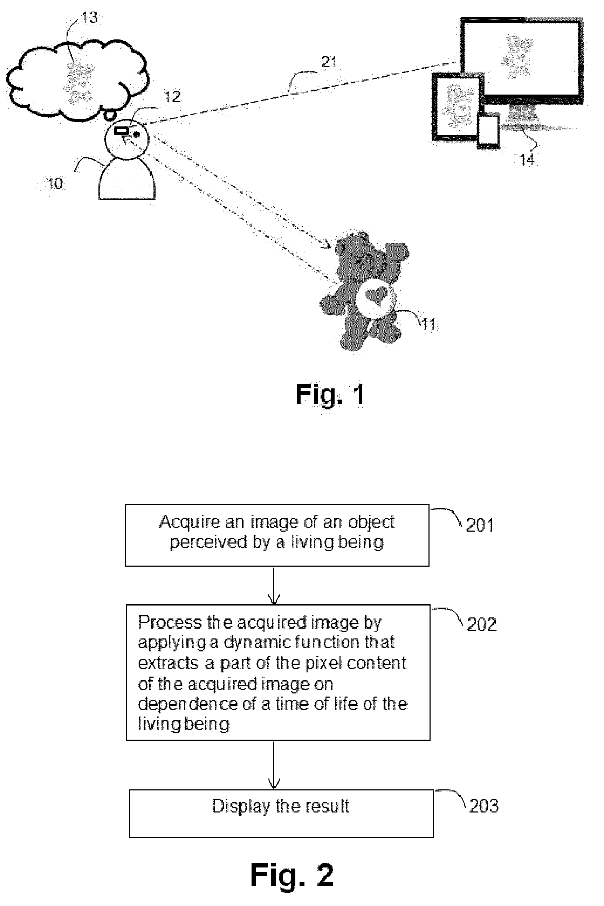

Fig. 1 shows the proposed architecture of the invention to display an image according to the visual perception of a living being according to a preferred embodiment. In accordance with this preferred embodiment the living being is a baby.

As can be showed in said Fig.1, the proposed system includes a detector 12 such as a camera system that includes one or more cameras (not illustrated) to acquired one or more images 13 perceived of an object 11 by said baby 10, in which said acquired image has a given pixel content. The camera of the camera system may be a visible light camera according to an embodiment. In addition, the proposed system also includes a computer system, or means, 14 such as a PC, a Smartphone, a Tablet, among any other computer system/means having one or more processors and at least one memory, to perform a processing treatment over the acquired image and to display through its display/screen the processed image. The detector 12 and the computer system 14 are configured to communicate to each other through any known wireless communication technology 21.

The detector 12 may be included in a housing (not shown in the figures) or may be directly placed next to the baby 10. In the case the detector 12 being included in said housing, the housing may have some kind of attaching means (e.g. a strap) to be attached to a body part of the baby 10, preferably to the baby's head. The housing may be of any material and/or shape, but of dimensions adequate to be positioned on the babies' head, or nearby, without disturbing the baby 10. In an embodiment, the housing is arranged or placed on a bonnet or hat to be worn by the baby 10.

The displaying means may not be included in the computer system 14 but form part a computer device (not showed in the figures) remote to the computer system 14. Both computers having a communication interface as communication means allowing the communication with each other either though a wired or a wireless technology.

The processing treatment preferably comprises the application of a dynamic function, by preference implemented in a signal processing filter, extracting a part of said pixel content of the acquired image on dependence of a time of life of the baby 10.

The signal processing filter for spatial frequency filtering the acquired image, applies a Fourier transform over the acquired image, multiplies the acquired image with the dynamic function and then re-transforms it into the spatial domain:

$$G(u,v) = H(u,v)F(u,v)$$

where, F(u,v) is the Fourier transform of the acquired image to be filtered and H(u,v) is the filter transform function that yields G(u,v) by attenuating the high-frequency components of F(u,v). The inverse transform will then yield the desired filtered image g(x,y).

For instance, for a square image of size NxN, the two-dimensional discrete Fourier transform (DFT) will be

given by:

$$F(k,l) = \sum_{i=0}^{N-1} \sum_{j=0}^{N-1} f(i,j)\, e^{-\iota 2\pi\left(\frac{ki}{N} + \frac{lj}{N}\right)}$$

Then, a low-pass filter is used, by preference a Butterworth filter. The transfer function of the Butterworth low-pass filter of order n and with cut-off frequency locus at a distance $D_0$ from the origin is defined by the relation

$$H(u.v) = \frac{1}{1 + \left[D(u,v) / D_0\right]^{2n}}$$

where $D(u,v) = (u^2 + v^2)^{1/2}$.

The filter part that changes over time is the cut-off of the low-pass filter ($D_0$), which gets higher in living beings with days or weeks.

With reference to Fig. 2, therein it is illustrated an embodiment of the proposed method. According to this embodiment, an image is acquired (step 201) of an object 11 perceived by a baby 10, and then said acquired image is processed (step 202) by applying a dynamic function (e.g. implemented in a signal processing filter including a Butterworth filter) that extracts a part of a pixel content of the acquired image on dependence of a time of life of the baby 10. Finally, the result of that processing (step 203) is an image close to the true vision of the baby at that time, which can be displayed on a display/screen of a computer system/means 14 to be seen by a user/person to watch it and/or for evaluating it.

Even the above embodiments of the present invention have been described by considering that the living being is a baby, according to present invention the living being may also be an animal, a baby animal, the proposed system and method being equally appropriate to display the images perceived by said baby animal.

The proposed invention may be implemented in hardware, software, firmware, or any combination thereof. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is defined in the following set of claims.

**Claims**

1.    A system to display an image according to the visual perception of living beings, the system comprising:

     a detector (12) to acquire at least one image of an object (11) perceived (13) by a living being (10), said acquired image having a given pixel content;
     a computer means (14) to perform a processing treatment over said acquired image, generating a processed image; and

displaying means to display said processed image,

the system being **characterized in that** said computer means (14) includes a signal processing filter for applying a dynamic function that extracts a part of the pixel content of the acquired image on dependence of a time of life of the living being.

2. The system of claim 1, wherein the signal processing filter includes a Butterworth filter.

3. The system of claim 1, wherein the detector (12) comprises at least one camera.

4. The system of claim 1, wherein the detector (12) is included in a housing and the system comprises means for attaching the detector (12) to a part of the body of the living being (10).

5. The system of claim 1, wherein said displaying means are included in said computer system (14).

6. The system of claim 1, wherein said displaying means are included in a computer device, remote to the computer means (14), the computer device and the computer means (14) including communication means to communicate with each other through a wired or a wireless technology.

7. The system of any of the previous claims, wherein the living being is a baby and the time of life comprises a period of at least 185 days.

8. A method for displaying an image according to the visual perception of living beings, the method comprising:

acquiring, by a detector (12), at least one image of an object (11) perceived (13) by a living being (10), said acquired image having a given pixel content;
performing, by a computer means (14), a processing treatment over said acquired image, generating a processed image; and
displaying, by a displaying means, said processed image,

the method being **characterized in that** said processing treatment comprises applying a dynamic function that extracts a part of the pixel content of the acquired image on dependence of a time of life of the living being.

9. The method of claim 8, comprising implementing said dynamic function in a signal processing filter including a Butterworth filter.

10. The method of claims 8 or 9, comprising attaching the detector (12) to a part of the body of the living being (10), wherein said detector (12) comprises at least one camera.

11. The method of claim 8, comprising including the displaying means into a computer device remote to the computer means (14), both the computer device and the computer means (14) being able to communicate with each other through a wired or a wireless technology.

12. The method of any of the previous claims 8 to 11, wherein the living being is a baby and the time of life comprises a period of at least 185 days.

13. The method of claim 12, wherein the time of life is counted on days.

14. A computer program product comprising program code instructions which when loaded into a computer system controls the computer system to display an image according to the visual perception of living beings by executing each of the methods according to any one of claims 8 to 13.

**Fig. 1**

Acquire an image of an object perceived by a living being — 201

Process the acquired image by applying a dynamic function that extracts a part of the pixel content of the acquired image on dependence of a time of life of the living being — 202

Display the result — 203

**Fig. 2**

Europäisches
Patentamt

European
Patent Office

Office européen
des brevets

# EUROPEAN SEARCH REPORT

Application Number

EP 15 20 0343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "BabySee: Mobile app lets you see through an infant's eyes - Vector", <br><br> 16 April 2015 (2015-04-16), XP055283957, Retrieved from the Internet: URL:http://vector.childrenshospital.org/2015/04/babysee-mobile-app-lets-you-see-through-an-infants-eyes/ [retrieved on 2016-06-27] | 1,3,5,7,8,12-14 | INV. G06T5/00 |
| Y | * pages 1-3 * | 2,4,6,9-11 | |
| Y | Anonymous: "San Francisco Magazine ¦ Modern Luxury ¦ Google Glass Won Us Over This Morning", <br><br> 19 November 2013 (2013-11-19), XP055283696, Retrieved from the Internet: URL:http://www.modernluxury.com/san-francisco/story/google-glass-won-us-over-morning [retrieved on 2016-06-27] <br> * page 1 * | 2,4,6,9-11 | |
| | | | TECHNICAL FIELDS SEARCHED (IPC) |
| | | | G06T |
| Y | A Pawlowski: "GoPro attached to tiny helmet shows world from baby's perspective", <br><br> 21 August 2014 (2014-08-21), XP055283740, Retrieved from the Internet: URL:http://www.today.com/parents/gopro-attached-tiny-helmet-shows-world-babys-perspective-1D80097321 [retrieved on 2016-06-27] <br> * page 1 * | 2,4,6,9-11 | |

-/--

The present search report has been drawn up for all claims

| Place of search | Date of completion of the search | Examiner |
|---|---|---|
| Munich | 28 June 2016 | Luca, Mihai Bogdan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 20 0343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/240336 A1 (SAKO YOICHIRO [JP] ET AL) 28 August 2014 (2014-08-28) * the whole document * ----- | 1-14 | |
| A | US 2014/270707 A1 (FATHI ALIREZA [US] ET AL) 18 September 2014 (2014-09-18) * the whole document * ----- | 1-14 | |

TECHNICAL FIELDS
SEARCHED     (IPC)

The present search report has been drawn up for all claims

| Place of search | Date of completion of the search | Examiner |
|---|---|---|
| Munich | 28 June 2016 | Luca, Mihai Bogdan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 20 0343

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2016

| Patent document cited in search report | | Publication date | Patent family member(s) | | Publication date |
|---|---|---|---|---|---|
| US 2014240336 | A1 | 28-08-2014 | CN | 104010184 A | 27-08-2014 |
| | | | JP | 2014165706 A | 08-09-2014 |
| | | | US | 2014240336 A1 | 28-08-2014 |
| US 2014270707 | A1 | 18-09-2014 | NONE | | |

EPO FORM P0459

For more details about this annex : see Official Journal of the European Patent Office, No. 12/82

EP 3 182 364 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1236433 B1

- CN 104173021 A